# EUROPÄISCHE PATENTANMELDUNG

(11) **EP 0 718 331 A2**
(43) Veröffentlichungstag der Anmeldung: **26.06.1996**
(21) Anmeldenummer: 95119169.1
(22) Anmeldetag: 06.12.1995
(51) Int. Cl.: C08G 18/10, C08G 18/72

(54) **Zu harten Polyurethanschaumstoffen führende Mischungen**

(30) Priorität: 19.12.1994 DE 4445281
(71) Anmelder: BAYER AG, 51368 Leverkusen (DE)
(72) Erfinder: Gruss, Peter, D-51429 Bergisch Gladbach (DE); Kapps, Manfred, Dr., D-51467 Bergisch Gladbach (DE); Vehlewald, Peter, Dr., D-42799 Leichlingen (DE)

(57) **Zusammenfassung**

Zu harten Polyurethanschaumstoffen führende, vorzugsweise in einem Druckbehälter vorliegende Mischungen, enthalten
a) Isocyanatgruppen aufweisende Prepolymere, erhältlich durch Umsetzung von einem mindestens drei aromatische Kerne enthaltenden Polyphenyl-polymethylen-polyisocyanat mit Verbindungen mit mindestens zwei gegenüber Isocyanaten reaktionsfähigen Wasserstoffatomen vom Molekulargewicht 62 bis 10 000,
b) an sich bekannte Hilfs- und Zusatzstoffe und
c) Treibmittel mit einem Siedepunkt unterhalb von 0°C/760 mm Hg.

## Beschreibung

Es ist bekannt, Polyurethan-Ein- und Zweikomponentenschaumstoffe herzustellen, indem man Mischungen von Polyolen, Schaumstabilisatoren, Weichmachern, Flammschutzmitteln, Beschleunigern und anderen Hilfsmitteln im Überschuß mit Di-und/oder Polyisocyanaten in Gegenwart von verflüssigten Treibgasen zu freien Isocyanatgruppen enthaltenden Prepolymeren umsetzt. Diese Reaktion erfolgt üblicherweise in Druckbehältern, z.B. Aerosoldosen bzw. (für Zweikomponentenschaumstoffe) in drucklosen Zweikammerbehältern.

Beim Austragen der zum Einkomponentenschaum führenden Mischung bläht die Reaktionsmasse durch Verdampfen des Treibmittels auf (Frothing). Durch Reaktion mit Feuchtigkeit (z.B. Umgebungsfeuchtigkeit) wird der fertige Schaumstoff erhalten. Dieser kann in vielfältiger Weise eingesetzt werden, z.B. für Füll- und Befestigungszwecke (Türzargenmontage). Im Falle der Verwendung von Zweikomponentenschaumsystemen wird in der Regel die Mischung durch Umsetzung mit mindestens zwei aktive Wasserstoffatome aufweisende Verbindungen als Vernetzer ausgehärtet. Als Vernetzer kommen dabei z.B. Wasser und/oder organische Verbindungen in Frage.

Überraschenderweise wurde nun festgestellt, daß es durch Mitverwendung von speziellen aromatischen Polyisocyanaten gelingt, harte Polyurethanschaumstoffen mit für die Praxis ausreichenden Eigenschaften herzustellen.

Gegenstand der Erfindung sind zu harten Polyurethanschaumstoffen führende, vorzugsweise in einem Druckbehälter vorliegende Mischungen, enthaltend
a) Isocyanatgruppen aufweisende Prepolymere, erhältlich durch Umsetzung von einem mindestens drei aromatische Kerne enthaltenden Polyphenyl-polymethylen-polyisocyanats mit Verbindungen mit mindestens zwei gegenüber Isocyanaten reaktionsfähigen Wasserstoffatomen vom Molekulargewicht 62 bis 10 000,
b) an sich bekannte Hilfs- und Zusatzstoffe und
c) Treibmittel mit einem Siedepunkt unterhalb von 0°C/760 mm Hg.

Erfindungsgemäß bevorzugt ist, daß als mindestens drei aromatische Kerne enthaltendes Polyphenyl-polymethylen-polyisocyanat ein Polyisocyanat der Formel 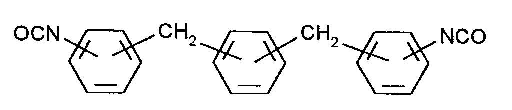
und/oder der Formel 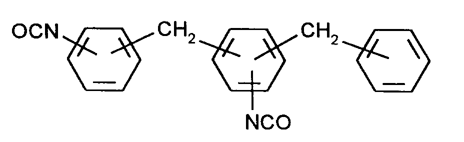
und/oder der Formel 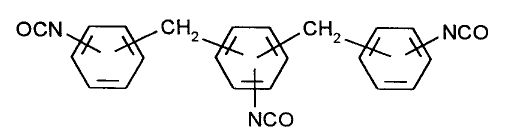
verwendet wird.

Erfindungsgemäß bevorzugt ist ferner, daß
- eine Mischung aus einem mindestens drei aromatische Kerne enthaltenden Polyphenyl-polymethylen-polyisocyanat der o.g. Formel, gegebenenfalls in Mischung mit höher kernigen Honologen dieser Polyphenylpolymethylen-polyisocyanate, und einem aliphatischen oder einem weiteren aromatischen Polyisocyanat verwendet wird,
- als weiteres aromatische Polyisocyanat Toluylendiisocyanat verwendet wird,
- als aliphatisches Polyisocyanat Hexamethylendiisocyanat oder Isophorondiisocyanat verwendet werden und
- als Treibmittel 1,1,1,2-Tetrafluorethan, Difluorethan, Dimethylether, Propan, Butan, Kohlendioxid, Distickstoffoxid, gegebenenfalls in Kombination, verwendet werden.

Die Erfindung betrifft auch harte Polyurethanschaumstoffe, erhältlich durch Aushärtung der erfindungsgemäßen Mischungen nach ihrem Austreten aus einem Druckbehälter durch Einwirkung von Feuchtigkeit ("Einkomponentenschaumstoffe") bzw. erhältlich durch Aushärtung der Mischungen durch Umsetzung mit reaktionsfähige Wasserstoffatome aufweisenden Verbindungen vom Molekulargewicht 18 bis 6 000 als Vernetzer ("Zweikomponentenschaumstoffe"). Diese Vernetzer sind an sich bekannt und sind beispielsweise Wasser oder organische Polyole wie Ethylenglykol, Diethylenglykol, Butandiol oder Trimethylolpropan.

Ausgangskomponenten für die erfindungsgemäß einzusetzenden Prepolymeren a) sind:
1) Die oben näher gekennzeichneten Polyisocyanate,
2) Verbindungen mit mindestens zwei gegenüber Isocyanaten reaktionsfähigen Wasserstoffatomen von einem Molekulargewicht in der Regel von 62-10.000. Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 100 bis 6000, vorzugsweise 2000 bis 6000, z.B. mindestens 2, in der Regel 2 bis 8, vorzugsweise aber 2 bis 6, Hydroxylgruppen aufweisende Polyether und Polyester und/oder modifizierte Pflanzenöle sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden. Bevorzugte Polyether sind solche auf Basis von Trimethylpropan oder Sucrose.
   Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die üblicherweise als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
   Die Prepolymeren werden in an sich bekannter Weise hergestellt.
   Die in der erfindungsgemäßen Mischung enthaltenen Hilfs- und Zusatzmittel b) sind z.B.
   - Katalysatoren der an sich bekannten Art,
   - oberflächenaktive Zusatzstoffe, wie Emulgatoren und Schaumstabilisatoren, wobei siliciumorganische Schaumstabilisatoren bevorzugt sind und in der Regel in einer Menge von 1-5 Gew.-%, bezogen auf Prepolymer a), eingesetzt werden,
   - Weichmacher, Zellregler der an sich bekannten Art wie Paraffine oder Fettalkohole oder Dimethylpolysiloxane sowie Pigmente oder Farbstoffe, Flammschutzmittel der an sich bekannten Art, z.B. Trikresylphosphat, ferner Stabilisatoren gegen Alterungs- und Witterungseinflüsse und gegebenenfalls fungistatisch und bakteriostatisch wirkende Substanzen sowie Füllstoffe.
   Diese Hilfs- und Zusatzstoffe werden beispielsweise in der DE-OS 27 32 292, Seiten 21-24, beschrieben.
   Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.
   Als Treibmittel c), die einen Siedepunkt von unter 0°C/760 mm Hg aufweisen und gegebenenfalls im Druckbehälter verflüssigt und/oder gasförmig vorliegen seien beispielsweise genannt:
   1,1,1,2-Tetrafluorethan (R134a), Difluorethan, Dimethylether, Propan, Butan, Kohlendioxid, Distickstoffoxid.

Der fertige harte Polyurethanschaumstoff kann für Füllzwecke, z.B. zwischen Fensterrahmen und Mauerwerk, für Mauerdurchbrüche und Befestigungszwecke, z.B. für die Türzargenmontage, eingesetzt werden.

### Ausführungsbeispiele

Unter ständigem Rühren wird die gewünschte Menge der nachstehend genannten Komponenten I-IV in einen feuchtigkeitsfreien Druckbehälter gegeben und dieser mit einem mit Ventil versehenen Dom verschlossen. Nach dem Verschließen wird eine abgestimmte Menge Treibgas aufgedrückt. Gegebenenfalls werden die einzelnen Komponente der Treibgasmischung nacheinander aufgedrückt.

In Druckbehälter bildet sich das Isocyanatgruppen aufweisende Prepolymer. Nach dem Austreten des Gemisches aus dem Druckbehältern wird ein Dämmschaum mit guten Gebrauchseigenschaften erhalten.

### Beispiel 1

Komponente I 50 g
Polyesterpolyol
Polyetherpolyol
propoxyliertes Alkanolamin
Polyethersiloxan
N-substituiertes Morpholin
Komponente II 110 g
3-Kern-MDI
Tris-(2-chlorisopropylphosphat)
Komponente III 22 g
Treibmittel R 134a
(1,1,1,2-Tetrafluorethan)
Komponente IV 18 g
Dimethylether

### Beispiel 2

Komponente I 50 g
Polyesterpolyol
Polyetherpolyol
propoxyliertes Alkanolamin
Polyethersiloxan
N-substituiertes Morpholin
Komponente II 110 g
3-Kern-MDI
Toluylendiisocyanat
(Tris-(2-chlorisopropylphosphat)
Komponente III 22 g
Treibmittel R 134 a
Komponente IV 18 g
Dimethylether

### Beispiel 3

Komponente I 50 g
Polyesterpolyol
Polyetherpolyol
propoxyliertes Alkanolamin
Polyethersiloxan
N-substituiertes Morpholin
Komponente II 110 g
3-Kern-MDI
Hexamethylendiisocyanat
Tris-(2-chlorisopropylphosphat)
Komponente III 22 g
Treibmittel R 134 a
Komponente IV 18 g
Dimethylether

### Beispiel 4

Komponente I 50 g
Polyesterpolyol
Polyetherpolyol
propoxyliertes Alkanolamin
Polyethersiloxan
N-substituiertes Morpholin
Komponente II 110 g
3-Kern-MDI
Isophorondiisocyanat
Tris-(2-chlorisopropylphosphat)
Komponente III 22 g
Treibmittel R 134 a
Komponente IV 18 g
Dimethylether

## Patentansprüche

1. Zu harten Polyurethanschaumstoffen führende, vorzugsweise in einem Druckbehälter vorliegende Mischungen, enthaltend
a) Isocyanatgruppen aufweisende Prepolymere, erhältlich durch Umsetzung von einem mindestens drei aromatische Kerne enthaltenden Polyphenyl-polymethylen-polyisocyanat mit Verbindungen mit mindestens zwei gegenüber Isocyanaten reaktionsfähigen Wasserstoffatomen vom Molekulargewicht 62 bis 10 000,
b) an sich bekannte Hilfs- und Zusatzstoffe und
c) Treibmittel mit einem Siedepunkt unterhalb von 0°C/760 mm Hg.

2. Zu harten Polyurethanschaumstoffen führende Mischungen nach Anspruch 1, dadurch gekennzeichnet, daß als mindestens drei aromatische Kerne enthaltendes Polyphenyl-polymethylen-polyisocyanat ein Polyisocyanat der Formel 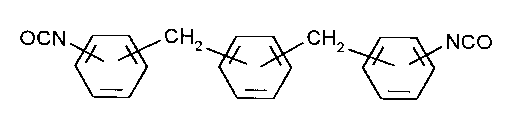 und/oder der Formel 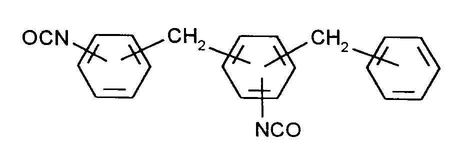 und/oder der Formel 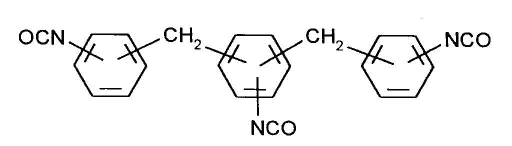 verwendet wird.

3. Zu harten Polyurethanschaumstoffen führende Mischungen nach Anspruch 1, dadurch gekennzeichnet, daß eine Mischung aus dem mindestens drei aromatische Kerne enthaltenden Polyphenyl-polymethylen-polyisocyanat und einem aliphatischen oder einem weiteren aromatischen Polyisocyanat verwendet wird.

4. Zu harten Polyurethanschaumstoffen führende Mischungen nach Anspruch 3, dadurch gekennzeichnet, daß als weiteres aromatisches Polyisocyanat Toluylendiisocyanat verwendet wird.

5. Zu harten Polyurethanschaumstoffen führende Mischungen nach Anspruch 3, dadurch gekennzeichnet, daß als aliphatisches Polyisocyanat Hexamethylendiisocyanat verwendet wird.

6. Zu harten Polyurethanschaumstoffen führende Mischungen nach Anspruch 3, dadurch gekennzeichnet, daß als aliphatisches Polyisocyanat Isophorondiisocyanat verwendet wird.

7. Zu harten Polyurethanschaumstoffen führende Mischungen nach Anspruch 1 bis 6, dadurch gekennzeichnet, daß als Treibmittel 1,1,1,2-Tetrafluorethan, Difluorethan, Dimethylether, Propan, Butan, Kohlendioxid, Distickstoffoxid, gegebenenfalls in Kombination, verwendet werden.

8. Harte Polyurethanschaumstoffe, erhältlich durch Aushärtung der Mischungen gemäß Anspruch 1 bis 7 nach ihrem Austreten aus einem Druckbehälter durch Einwirkung von Feuchtigkeit.

9. Harte Polyurethanschaumstoffe, erhältlich durch Aushärtung der Mischungen gemäß Anspruch 1 bis 7 durch Umsetzung mit reaktionsfähige Wasserstoffatome aufweisenden Verbindungen vom Molekulargewicht 18 bis 6 000 als Vernetzer.
